Europäisches Patentamt

European Patent Office

Office européen des brevets

(11) Veröffentlichungsnummer: **0 520 439 A2**

# (12) EUROPÄISCHE PATENTANMELDUNG

(21) Anmeldenummer: **92110696.9**

(51) Int. Cl.5: **B23K 9/09**

(22) Anmeldetag: **25.06.92**

(30) Priorität: **27.06.91 DE 4121237**

(43) Veröffentlichungstag der Anmeldung:
**30.12.92 Patentblatt 92/53**

(84) Benannte Vertragsstaaten:
**AT BE CH DE DK ES FR GB GR IT LI LU MC NL PT SE**

(71) Anmelder: **UTP Schweissmaterial GmbH & Co. KG**
**Elsässer Strasse 10**
**W-7812 Bad Krozingen 2(DE)**

(72) Erfinder: **Strumpf, Hans-Günter, Dipl.-Ing.**
**Gartenstrasse 5**
**W-7801 Reute(DE)**

(74) Vertreter: **Ratzel, Gerhard, Dr.**
**Seckenheimer Strasse 36a**
**W-6800 Mannheim 1(DE)**

(54) **Elektronischer Schweissstrom-Generator für das Impuls Lichtbogenschweissen.**

(57) Die Erfindung betrifft einen elektronischen Schweißstrom-Generator für das Impuls-Lichtbogenschweißen, mit einem durch elektrische Führungsgrößen steuerbaren Leistungsteil, die über elektronische Schaltkreise vorgebbar sind, wobei im Pulsbetrieb (T) jeweils während der Pulsphasen ($t_p$) ein höherer Generator-Pulsstrom ($I_p$) oder eine höhere Generator-Pulspannung ($U_P$) und jeweils während der Grundphasen ($t_G$) ein niedrigerer Generator-Grundstrom ($I_G$) oder Generator-Grundspannung ($U_G$) erzeugbar sind. Ausgehend von der $U_p$-$I_G$-Modulation werden während der Pulsphasen ($t_p$) die Pulsspannung ($U_P$) und während der der Grundphasen ($t_G$) der Grundstrom ($I_G$) geregelt; während der Grundphasen ($t_G$) wird zeitselektiv die Grundspannung ($U_G$) gemessen, der Meßwert (E) gespeichert und nach jeder Pulsperiode (T) aktualisiert, wobei der aktualisierte Meßwert (E) der Grundspannung ($U_G$) in direkter Proportionalität zur real wirkenden Länge (LL) des Lichtbogens erhalten wird. Dieser aktualisierte Meßwert (E) dient zur übergeordneten Regelung des Schweißprozesses, indem der Meßwert (E), der die Länge (LL) des Lichtbogens wiedergibt, mit einem einstellbaren Sollwert (SWLL) für die Länge des Lichtbogens verglichen und mit einem nachgeschalteten PI-Regler verstärkt wird, mit dem Ziel der genannten übergeordneten Führungsregelung.

EP 0 520 439 A2

Technisches Gebiet:

Die Erfindung betrifft einen elektronischen Schweißstrom-Generator gemäß dem Oberbegriff des Patentanspruchs 1.

Stand der Technik:

Die reale Lichtbogenspannung kann zu Zwekken der Regelung der Pulsspannung als Istwert nicht direkt erfaßt werden, da am Lichtbogen kein elektrischer Abgriff möglich ist. In den meisten Fällen wird deshalb der Spannungs-Istwert an den Ausgangsklemmen der Schweiß-Stromquelle abgegriffen.

Der Sollwert $U_p$ der Pulsspannung wird unter Beachtung auch der anderen relevanten Parameter so eingestellt, bis der Schweißprozeß optimal läuft. Dabei ist die wirksame Lichtbogenspannung kleiner als die geregelte Generatorausgangsspannung. Die Differenz ergibt sich aus dem Spannungsabfall an den Schweißkabeln und dem Spannungsabfall an der Kontaktdüse.

Diese Spannungsabfälle erhöhen sich im Verlauf der Zeit durch Widerstandserhöhung der sich erwärmenden Schweißkabel und der verschleißenden Kontaktdüse. Die am Lichtbogen verfügbare Spannung sinkt demgemäß, der Lichtbogen wird kürzer und die Spritzerhäufigkeit nimmt zu bis hin zur völligen Entgleisung des Prozesses.

Durch Beobachtung der Lichtbogenlänge und entsprechender Erhöhung des Sollwertpotentiometers der Pulsspannung $U_p$ läßt sich die tendenziell verringernde Lichtbogenlänge manuell korrigieren und damit im gewünschten Sinn konstant hatten. Diese Methode überfordert jedoch das Bedienungspersonal und verbietet sich aus Kostengründen und mangelnder Qualitätssicherung von selbst.

Deshalb wird in der Praxis nach Erfahrung gehandelt. Nach einer ermittelten Zahl von Schweißzyklen wird die Kontaktdüse prinzipiell vorsorglich gewechselt. Diese Methode ist zwar praktikabel sie führt jedoch zu einem hohen Düsenverbrauch und zu relativ hohen Stillstandzeiten und damit zu vermeidbaren hohen Kosten.

Da dieser sich zeitlich erhöhende, schädliche Spannungsabfall an der Kontaktdüse und den sich erwärmenden Schweißkabeln nur in der Pulsspannungsphase signifikant ist, also während der Pulsphase $t_p$ entsteht, wäre es naheliegend, statt der $U_p$-$I_G$-Modulation das Prinzip der $I_p$-$I_G$-Modulation anzuwenden, da konstante Ströme am Prozeßwiderstand konstante Spannungsabfälle erzeugen.Da hierbei jedoch die sogenannte "innere Regelung" der $U_p$-$I_G$-Modulation nicht vorhanden ist, muß die Prozeßstabilität mit Hilfe der Pulszeitregelung ($t_p$-Regelung) erzwungen werden. Diese Methode erhöht zweifellos die Düsenstandzeit, führt jedoch nachweislich zu schlechteren Schweißqualitäten.

Technische Aufgabe:

Der Erfindung liegt die Aufgabe zugrunde, bei einem elektronischen Schweißstrom-Generator der eingangs genannten Gattung Tendenzen zur Lichtbogenverkürzung oder -verlängerung von vornehrein sofort zu erkennen und wirksam zu unterdrükken bzw. auf eine eingestellte Länge zu regeln.

Darstellung der Erfindung und deren Vorteile:

Die Aufgabe wird durch einen elektronischen Schweißstrom-Generator gemäß den folgenden Merkmalen des Anspruchs 1 gelöst:

a) ausgehend von der $U_p$-$I_G$-Modulation werden während der Pulsphasen ($t_p$) die Pulsspannung ($U_P$) und während der Grundphasen ($t_G$) der Grundstrom ($I_G$) geregelt

b) während der Grundphasen ($t_G$) wird zeitselektiv die Grundspannung ($U_G$) gemessen, der Meßwert (E) gespeichert und nach jeder Pulsperiode (T) aktualisiert

c) der aktualisierte Meßwert (E) der Grundspannung ($U_G$) wird in direkter Proportionalität zur real wirkenden Länge (LL) des Lichtbogens erhalten

d) der aktualisierte Meßwert (E) dient zur übergeordneten Regelung des Schweißprozesses, indem der Meßwert (E), der die Länge (LL) des Lichtbogens wiedergibt, mit einem einstellbaren Sollwert (SWLL) für die Länge des Lichtbogens verglichen wird. Die sich aus dem aktualisierten Meßwert (E) und dem Sollwert (SWLL, $SWU_{LL}$) ergebende Regelabweichung ($\pm X_w$) wird einem nachgeschalteten PI-Regler aufgegeben und zur Stellgröße ($\pm Y$) verstärkt, die auf die Prozeßparameter, wie Sollwerte ($U_p$, $t_p$, $t_G$) inkrementierend oder dekrementierend einzuwirken imstande ist, wobei die Eingriffsstärke (Regelfaktor) einstellbar gestaltet oder starr festlegbar ist. Weitere vorteilhafte Ausgestaltungen der Erfindung sind in den Unteransprüchen gekennzeichnet.

Die Erfindung besitzt den hervorstechenden Vorteil, daß durch die Lichtbogenlängenregelung beim Pulslichtbogenschweißen in beiden Richtungen die Prozeßstabilität erhöht, der Kontaktdüsenverbrauch erheblich verringert und die Stillstandszeiten herabgesetzt werden. In einer praktischen Versuchsanordnung konnte die Kontaktdüsenstandzeit beim Einsatz der Erfindung auf das 5fache von Schweißzyklen erhöht werden. Ebenso bleibt beim Handschweißen, wie Pendeln in einer Kehlnaht, die Lichtbogenlänge stabil; zusätzlich wird die Spritzerhäufigkeit stark reduziert. Des weiteren ist der Einfluß der Schweißkabelwiderstandserhöhung bei der Erwärmung der Schweißkabel nunmehr ohne Einfluß auf den Schweißprozeß.

Der Kern der Erfindung liegt in der Erfassung eines Meßwertes, der sich direkt proportional zur real wirkenden Lichtbogenlänge verhält, wobei vorteilhaft das Prinzip der Pulstechnik mit $U_p$-$I_G$-Modulation verwendet wird. Während der Pulsphase $t_p$ wird die Pulsspannung $U_p$ geregelt, während der Grundphase $t_G$ hingegen der Grundstrom $I_G$. Wird während der Grundphase $t_G$ zeitselektiv die Generatorspannung gemessen, gespeichert und nach jeder Pulsperiode aktualisiert, dann wird auf diese Weise ein der Lichtbogenlänge proportionaler Meßwert erhalten, der in hervorragender Weise für eine die Lichtbogenlänge erhaltende, übergeordnete Regelung zur Verfügung steht.

Dieser Istwert "Lichtbogenlänge" wird mit einem einstellbaren Sollwert "Lichtbogenlänge" verglichen und die sich daraus ergebende Regelabweichung $\pm X_w$ durch einen nachgeschalteten PI-Regler zur Stellgröße $\pm Y$ verstärkt. Der Sollwert folgt dabei der Beziehung $U_{LL} = U_0 + m \cdot U_{IG}$; darin bedeuten:

$U_{LL}$      = Sollwert Lichtbogenlänge
$U_0$      = Grundspannung (einstellbar z.B. über Potentiometer zwischen 13-20V)
$m$      = Neigungsfaktor mit Einsteller, einstellbar (z.B. auf Platine) von 0,02-0,05
$U_{IG}$      = Leitspannung für den Grundstrom $I_G$

Damit läßt sich in vorteilhafter Weise eine alle Prozeßeinflüsse berücksichtigende Kennlinie einstellen, die ähnlich der starren VDE-Kennlinie erhalten werden kann.

Mit der Reglerausgangsgröße $\pm Y$ kann in vielfältiger Weise auf die in der Pulstechnik benötigten Prozeßparameter, wie Sollwerte $U_p$, $t_p$ oder $t_G$, inkrementierend oder dekrementierend eingegriffen werden, wobei die Eingriffsstärke, der Regelfaktor, einstellbar gestaltet oder starr festgelegt sein kann.

Zur Verdeutlichung des erfindungsgemäßen Prinzips sollen die nachfolgenden Regelarten dienen:

Regelart "*Pulsspannungserhöhung bei Tendenz zur Lichtbogenverkürzung*":
Wirksamer Sollwert $U_p$ = eingestellter Sollwert $U_p$ + $\Delta U_p$, wobei bedeuten:
$U_p = \alpha \cdot (+Y)$; der Wert -Y wird unterdrückt
$\alpha$ = Eingriffsstärke (Regelfaktor)
Regelart "*Pulsspannungserhöhung und* Pulszeiterhöhung *bei Tendenz zur Lichtbogenverkürzung*":

Wirksamer Sollwert $U_p$ = eingestellter Sollwert $U_p$ + $\Delta U_p$

Wirksamer Sollwert $U_{tp}$ = eingestellter Sollwert $U_{tp}$ + $\Delta U_{tp}$; wobei bedeuten:
$\Delta U_p = \alpha \cdot (+Y)$; der Wert-Y wird unterdrückt

$\Delta U_{tp} = \alpha 1 \cdot (+Y)$
Die beiden genannten Regelarten eignen sich vorzugsweise zum automatischen Schweißen und hierbei insbesondere zum Erhöhen der Kontaktdüsenstandzeit und der Beseitigung der Einflüsse der Zuleitungskabel.
Regelart "*Pulsspannungserhöhung bei Tendenz zur Lichtbogenverkürzung sowie* Grundzeiterhöhung *bei Tendenz zur Lichtbogenverlängerung*":

Wirksamer Sollwert $U_p$ = eingestellter Sollwert $U_p$ + $\Delta U_p$

Wirksamer Sollwert $U_{tG}$ = eingestellter Sollwert $U_{tG}$ + $\Delta U_{tG}$; wobei bedeuten:
$\Delta U_p = \alpha \cdot (+Y)$; der Wert - Y wird unterdrückt
$\Delta U_{tG} = \alpha 2 \cdot (-Y)$; der Wert + Y wird unterdrückt.

Diese $U_p$-$t_G$-Regelart eignet sich vorzugsweise zum manuellen Schweißen.

Je nach Anwendung kann eine der drei vorgenannten Regelarten vorgegeben bzw. eingeschaltet werden. Voraussetzung hierfür ist ein optimal eingestellter Schweißprozeß, wobei ein vorhandener Regelartschalter in der Stellung Abgleich" stehen muß. Der Sollwert der Spannung "Lichtbogenlänge" $SWU_{LL}$ wird bei laufendem Prozeß so eingestellt, bis die Stellgröße $\pm Y = 0$ ist. Dazu kann die Stellgröße auf eine Differenzanzeige beliebiger Bauart geschaltet sein, z.B. auf ein Nullpunkt-Instrument oder LED-Zeilen-Anzeige o.ä., um positive und negative Abweichungen von Null zu erkennen. In dieser Abgleichstellung wirkt der PI-Regler nur als P-Regler mit definierter Verstärkung und somit in Funktion als Anzeigeverstärker. Nach erfolgtem Abgleich kann dann auf die gewünschte Regelart geschaltet werden; danach sollten die Prozeßparameter nicht mehr verstellt werden. Ist dies zum Beispiel bei einer anderen Schweißaufgabe erforderlich, ist zuerst ein einmaliger Neuabgleich notwendig. Dieser Abgleich kann auch selbsttätig gestaltet werden (autom. Nullpunktabgleich).
Der Regel-Stellgröße $\pm Y$ kann ein Grenzwertmelder zugeordnet sein, der dem Anwender signalisiert, wann die erhöhte Standzeit erreicht ist. Als Eingangsgröße erhält der Grenzwertmelder vorzugsweise den arithmetischen Mittelwert der Stellgröße, wodurch schnelle Stellgrößenausschläge unterdrückt werden.

Vorzugsweise ist der Grenzwertmelder in der Abgleichstellung und während der Zündphase eines Schweißprozesses gesperrt, um Fehlmeldungen zu vermeiden; er wird somit verzögert freigegeben. Der Grenzwert kann mit einem zugeordneten Potentiometer zur Einstellung der Grenzwertspannung $U_{GW}$ eingestellt werden.

Kurzbeschreibung der Zeichnung, in der zeigen:

Figur 1 ein Blockschaltbild des elektronischen Schweißstrom-Generators

Figur 2 die Erfassung der Grundspannung durch Sample-and-Hold und

Figur 3 die Darstellung des Zusammenhangs zwischen dem Regelfaktor, dem wirksamen Spannungs-Sollwert $U_p$ der Pulsphase $t_G$ bei der $U_p$-$t_G$-Regelung.

Bevorzugte Ausführung der Erfindung:

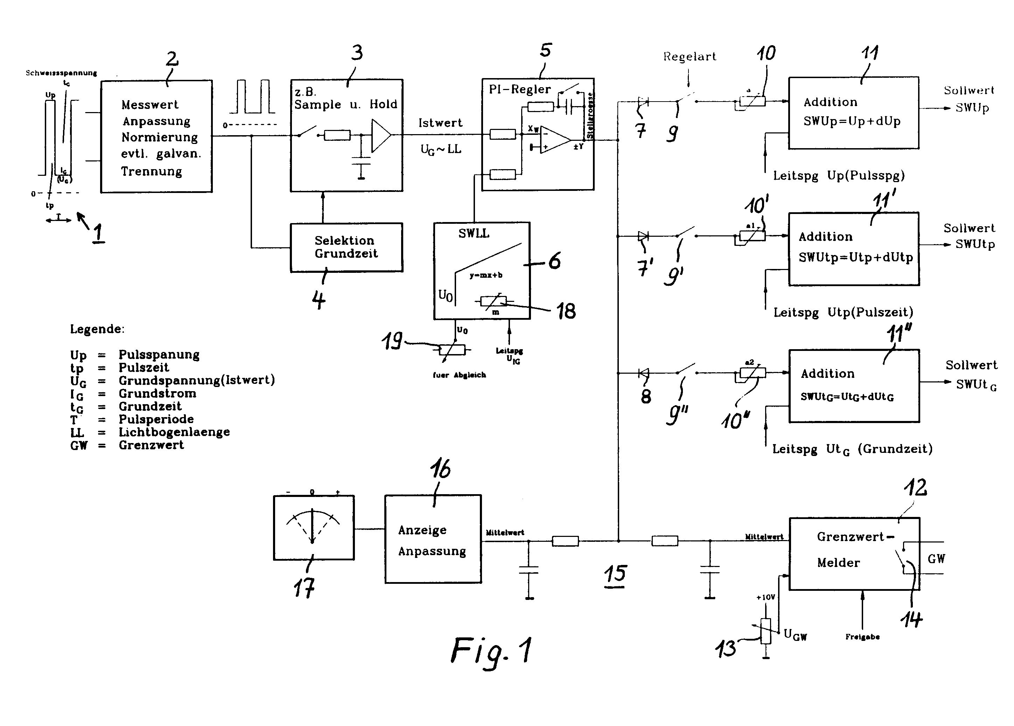

Eine Periode T der Schweißspannung 1 ist im Blockschaltbild Figur 1 des elektronischen Schweißstrom-Generators dargestellt. Im Pulsbetrieb wird während der Pulsphasen $t_p$ eine höhere Generator-Pulsspannung $U_p$ und während der Grundphasen $t_G$ eine niedrigere Generator-Grundspannung $U_G$ erzeugt, wobei vorzugsweise die Grundphasen $t_G$ zeitlich länger dauern als die Pulsphasen $t_p$. Das Schweißspannungssignal wird einem Anpassungsnetzwerk 2 aufgegeben gegebenenfalls zur Anpassung des Meßwertes und/oder zur Normierung und eventuell zur galvanischen Trennung. Das Ausgangssignal des Netzwerkes 2 wird zur zeitselektiven Erfassung des geraden Astes der Grundspannung $U_G$ des Schweißspannungssignals einer Sample-and-Hold-Schaltung 3 zugeführt; gleichzeitig wird das Ausgangssignal aus dem Netzwerk 2 parallel auf einen Baustein 4 für die Selektion und Festlegung der Grundphase $t_G$ aufgegeben. Dieser Baustein 4 dient dazu, bei sinkender Meßspannung das Sample-Signal zu verzögern, bei steigender Meßspannung hingegen sofort auszuschalten, damit tatsächlich nur der waagrechte Ast der Grundspannung $U_G$ erfaßt wird. Dieser so erhaltene Meßwert E ist direkt proportional zur real wirkenden Länge LL des Lichtbogens. Der Meßwert E wird durch jede Periode T der Schweißspannung aktualisiert, so daß immer ein aktualisierter Meßwert E proportional der Lichtbogenlänge LL am Ausgang der Sample-and-Hold-Schaltung 3 zur Verfügung steht; dieser Meßwert E gibt somit den Istwert der Grundspannung $U_G$ wieder, der direkt proportional zur real wirkenden Lichtbogenlänge LL ist.

Nun erfolgt der Vergleich dieses Meßwertes E (Istwert $U_G$) mit einem einstellbaren Sollwert für die Lichtbogenlänge SWLL, der vorzugsweise ein Spannungswert $SWU_{LL}$ ist, wobei der Sollwert $SWU_{LL}$ aus einem Baustein 6 gewonnen wird. Der Sollwert der Spannung $SWU_{LL}$ folgt der Beziehung: $SWU_{LL} = U_0 + m \cdot U_{IG}$, wobei der Neigungsfaktor m mittels eines Potentiometers 18 einstellbar ist, der mit der zugeführten Leitspannung $U_{IG}$ des Grundstromes multipliziert wird. Über ein Potentiometer 19 des Bausteines 6 wird die Grundspannung $U_0$ eingestellt. Auf diese Weise wird am Eingang des PI-Reglers 5 die Regelabweichung ±X gewonnen, die dem PI-Regler 5 zugeführt wird.

Mit dieser Gleichung läßt sich eine alle Prozeßeinflüsse berücksichtigende Kennlinie einstellen, ähnlich der starren VDE-Kennlinie. Die Regelabweichung ± $X_w$ wird durch den PI-Regler 5 zur Stellgröße ± Y verstärkt, die die Regelausgangsgröße darstellt. Mit der Regelausgangsgröße ± Y kann nun in vielfältiger Art auf die in der Pulstechnik benötigten Prozeßparameter, wie Sollwerte, Pulsspannung Up, Pulsphase $t_p$ oder Grundphase $t_G$ inkrementierend oder dekrementierend eingegriffen werden. Die Eingriffsstärke, das ist der Regelfaktor $\alpha$, kann dabei einstellbar gestaltet oder starr festgelegt werden.

Im Blockschaltbild der Figur 1 wird dazu die Stellgröße ± Y parallel über eine Diode 7 in Durchlaßrichtung auf einen Schalter 9 für die Regelart *"Pulsspannungserhöhung bei Tendenz zur Lichtbogenverkürzung"* aufgegeben, d.h. bei sinkender Lichtbogenlänge wird bei dieser Regelart die Pulsspannung soweit erhöht, bis die ursprüngliche Lichtbogenlänge wieder erreicht ist. Diese Regelart optimiert insbesondere den Schweißprozeß.

Gleichzeitig wird die Stellgröße ± Y über eine in Durchlaßrichtung gepolte Diode 7' auf einen Schalter 9' für die Regelart *"Pulsspannungserhöhung und* Pulszeiterhöhung bei *Tendenz zur Lichtbogenverkürzung"* aufgegeben, d.h. bei sinkender Lichtbogenlänge werden die Pulsspannung und gleichzeitig die Pulsbreite soweit erhöht, bis die ursprüngliche Lichtbogenlänge wieder erreicht ist.

Gleichzeitig wird die Stellgröße ± Y über eine in Sperrichtung geschaltete Diode 8 einem Schalter 9" aufgegeben zu Erzeugung der Regelart *"Pulsspannungserhöhung bei Tendenz zur Lichtbogenverkürzung sowie* Grundzeiterhöhung *bei Tendenz zur Lichtbogenverlängerung"*, d.h. die Regelart dient zur Pulsspannungserhöhung bei sinkender Lichtbogenlänge und zur Grundzeiterhöhung bei steigender Lichtbogenspannung und wird vorwiegend beim Handschweißen eingesetzt.

Die Schalter 9, 9', 9" dienen zur Einstellung bzw. Wahl der Regelart. Vor jedem Baustein 11, 11', 11" ist je ein Potentiometer 10, 10', 10" angeordnet, um den Regelfaktor $\alpha$ bzw. $\alpha 1$ bzw. $\alpha 2$ einzustellen. Die Bausteine 11, 11' und 11" bestehen aus aktiven Addier-Netzwerken, in denen durch Addition der entsprechenden Leitspannung plus dem Differential dieser Leitspannung der entsprechende Sollwert SW erzeugt wird, der vorzugsweise eine Spannung ist, nämlich einer der Sollwerte:

$SWU_p = U_p + dU_p$ für den Baustein 11

$SWU_{tp} = U_{tp} + dU_{tp}$ für den Baustein 11' oder

$SWU_{tG} = U_{tG} + dU_{tG}$ für den Baustein 11".

Dieser jeweilige Sollwert kann nun in einem geeigneten Leistungsteil als Ansteuergröße verwendet werden.

Die Stellgröße ± Y wird gleichermaßen, vorzugsweise über ein RC-Netzwerk 15, zur Mittelwertbildung einem Grenzwertmelder 12 und parallel hierzu einem Baustein 16 zur Anzeige-Anpassung aufgegeben, dessen Ausgangssignal auf ein Anzeigeinstrument 17 gegeben wird, das eine ± Nullabweichung anzuzeigen imstande ist. Der Grenzwertmelder 12 signalisiert dem Anwender, wann die durch die übergeordnete Regelung der genannten Regelarten erhöhte Standzeit erreicht ist. Durch die arithmetische Mittelwertbildung der Stellgröße werden schnelle Stellgrößenausschläge unterdrückt. Der Grenzwertmelder 12 ist mittels eines Schalters 14 in der Abgleichstellung und während der Zündphase eines Schweißprozesses gesperrt, um Fehlmeldungen zu vermeiden; er wird verzögert freigegeben. Die Grenzwertspannung $U_{GW}$ kann über ein Potentiometer 13 dem Grenzwertmelder 12 vorgegeben werden.

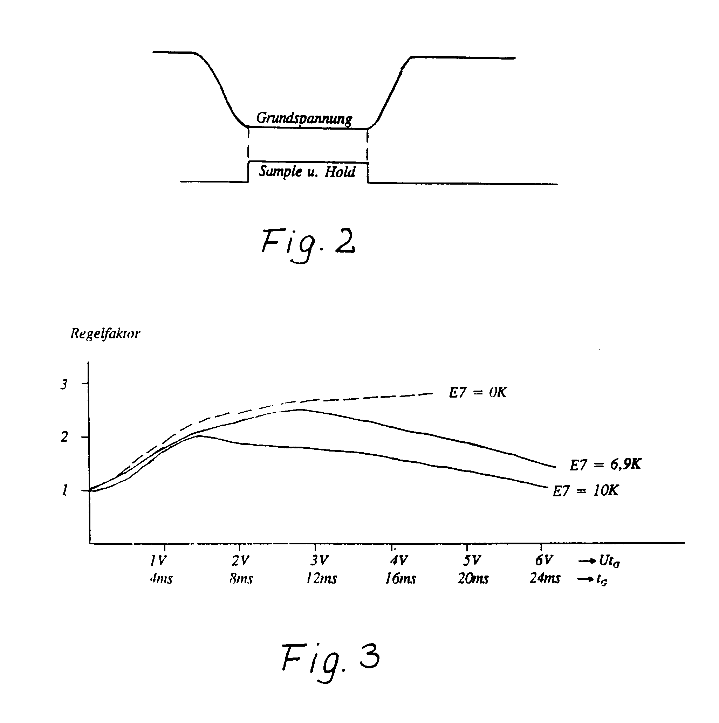

In Figur 2 ist die Erfassung der Grundspannung durch den Sample-and-Hold-Schaltkreis 3 dargestellt. Das Sample-and-Hold-Signal wird nur während der Grundphase $t_G$ an die Meßspannung gelegt, wenn tatsächlich die Grundspannung $U_G$ erreicht ist, d.h. daß auf diese Weise nur der waagrechte Ast der Meßspannung erfaßt wird. Die Grundspannung wird gespeichert und steht in der Hold-Phase als vorzugsweise positives Istwertsignal für den nachfolgenden Soll-Istwertvergleich zur Verfügung.

Der Soll-Istwertvergleich erfolgt am Eingang des PI-Reglers 5, dessen PI- Verhalten in veränderbarer Weise vorgegeben werden kann.

Figur 3 zeigt den Zusammenhang zwischen dem Regelfaktor und der Grundphase $t_G$ sowie von der Leitspannung $U_{tG}$. Dabei erkennt man, daß bei kleinen $t_G$-Zeiten der Reglereingriff abgeschwächt wird, weil hierbei die sogenannte "Innere Regelung" stärker wirksam ist, d.h., die $t_p$-Phase ist relativ groß im Vergleich zur Periodendauer T. Bei großen $t_G$-Zeiten, ungefähr ab 15 ms, wird der Reglereingriff degressiv, damit die Pulsfrequenz nicht zu niedrig wird.

Liste der Bezugszeichen:

| | |
|---|---|
| 1 | Periode der Schweißspannung |
| 2 | Meßwert-Anpassungsnetzwerk |
| 3 | Sample-and-Hold-Schaltung |
| 4 | Baustein für die Selektion der Grundphase |
| 5 | PI-Regler |
| 6 | Baustein zur Erzeugung des Spannungs-Sollwertes der Lichtbogenlänge |
| 7,7', 8 | Dioden |
| 9,9', 9'' | Schalter |
| 10,10', 10'' | Potentiometer |
| 11,11', 11'' | aktive Addiernetzwerke oder Additionsschaltkreise |
| 12 | Grenzwertmelder |
| 13 | Potentiometer |
| 14 | Grenzwertschalter |
| 15 | RC-Netzwerk |
| 16 | Baustein zur Anzeige-Anpassung |
| 17 | Anzeigeinstrument |
| 18, 19 | Potentiometer |
| $U_0$ | Grundspannung |
| $U_p$ | Pulsspannung |
| $I_p$ | Pulsstrom |
| $t_p$ | Pulsphase |
| $U_G$ | Grundspannung-Istwert |
| $I_G$ | Grundstrom-Istwert |
| $t_G$ | Grundphase |
| T | Pulsperiode |
| $U_{IG}$ | Leitspannung des Grundstromes |
| $U_{tp}$ | Spannung bezüglich der Pulsphase |
| $U_{tG}$ | Spannung bezüglich der Grundphase |
| LL | Lichtbogenlänge |
| $SWU_{LL}$ | Spannungs-Sollwert der Lichtbogenlänge |
| GW | Grenzwert |
| $U_{GW}$ | Grenzwertspannung |
| m | Neigungsfaktor |
| ±Y | Regelstellgröße |
| ±X | Regelabweichung |
| $\alpha$, $\alpha1$, $\alpha2$ | Regelfaktoren (Eingriffsstärke) |
| $SWU_P$ | Sollwert der Pulsspannung |
| $SWU_{tp}$ | Spannungs-Sollwert bezüglich der Pulsphase |
| $SWU_{tG}$ | Spannungs-Sollwert bezüglich der Grundphase |

**Patentansprüche**

1. Elektronischer Schweißstrom-Generator für das Impuls-Lichtbogenschweißen, mit einem durch elektrische Führungsgrößen steuerbaren Leistungsteil, die über elektronische Schaltkreise vorgebbar sind,, wobei im Pulsbetrieb (T) jeweils während der Pulsphasen ($t_p$) ein höherer Generator-Pulsstrom ($I_p$) oder eine höhere Generator-Pulspannung ($U_P$) und jeweils während der Grundphasen ($t_G$) ein niedrigerer Generator-Grundstrom ($I_G$) oder Generator-Grundspannung ($U_G$) erzeugbar sind, gekennzeichnet durch folgende Merkmale:

   a) ausgehend von der $U_p$-$I_G$-Modulation werden während der Pulsphasen ($t_p$) die Pulsspannung ($U_P$) und während der der Grundphasen ($t_G$) der Grundstrom ($I_G$) geregelt

   b) während der Grundphasen ($t_G$) wird zeitselektiv die Grundspannung ($U_G$) gemessen, der Meßwert (E) gespeichert und nach jeder Pulsperiode (T) aktualisiert

c) der aktualisierte Meßwert (E) der Grundspannung ($U_G$) wird in direkter Proportionalität zur real wirkenden Länge (LL) des Lichtbogens erhalten

d) der aktualisierte Meßwert (E) dient zur übergeordneten Regelung des Schweißprozesses, indem der Meßwert (E), der die Länge (LL) des Lichtbogens wiedergibt, mit einem einstellbaren Sollwert (SWLL) für die Länge des Lichtbogens verglichen und nachgeregelt wird.

2. Schweißstrom-Generator nach Anspruch 1, dadurch gekennzeichnet,
daß die sich aus dem aktualisierten Meßwert (E) und dem Sollwert (SWLL, $SWU_{LL}$) ergebende Regelabweichung ($\pm X_w$) einem nachgeschalteten PI-Regler aufgegeben und zur Stellgröße ($\pm Y$) verstärkt wird, die auf die Prozeßparameter, wie Sollwerte ($U_p$, $t_p$, $t_G$) inkrementierend oder dekrementierend einzuwirken imstande ist, wobei die Eingriffsstärke (Regelfaktor) einstellbar gestaltet oder starr festlegbar ist.

3. Schweißstrom-Generator nach Anspruch 1 oder 2, dadurch gekennzeichnet,
daß bei der Regelart "Pulsspannungserhöhung bei Tendenz zur Lichtbogenverkürzung" gilt:
Wirksamer Sollwert $U_p$ = eingestellter Sollwert $U_p$ + $\Delta U_p$, mit
$U_p = \alpha^{\bullet}(+Y)$
$\alpha$ = Eingriffsstärke (Regelfaktor),
wobei die negative Stellgröße (-Y) unterdrückt wird.

4. Schweißstrom-Generator nach Anspruch 1 oder 2, dadurch gekennzeichnet, daß bei der Regelart "Pulsspannungserhöhung und Pulszeiterhöhung bei Tendenz zur Licht-bogenverkürzung" gilt:

Wirksamer Sollwert $U_p$ = eingestellter Sollwert $U_p$ + $\Delta U_p$

Wirksamer Sollwert $U_{tp}$ = eingestellter Sollwert $U_{tp}$ + $\Delta U_{tp}$; mit:
$\Delta U_p = \alpha^{\bullet}(+Y)$
$\Delta U_{tp} = \alpha 1^{\bullet}(+Y)$,
wobei bezüglich $\Delta U_p$ die negative Stellgröße (-Y) unterdrückt wird.

5. Schweißstrom-Generator nach Anspruch 1 oder 2, dadurch gekennzeichnet, daß bei der Regelart "Pulsspannungserhöhung bei Tendenz zur Lichtbogenverkürzung sowie Grundzeiterhöhung bei Tendenz zur Lichtbogenverlängerung" gilt:

Wirksamer Sollwert $U_p$ = eingestellter Sollwert $U_p$ + $\Delta U_p$

Wirksamer Sollwert $U_{tG}$ = eingestellter Sollwert $U_{tG}$ + $\Delta U_{tG}$; wobei bedeuten:
$\Delta U_p = \alpha^{\bullet}(+Y)$
$\Delta U_{tG} = \alpha 2^{\bullet}(-Y)$,
wobei bezüglich $\Delta U_p$ die negative Stellgröße (-Y) und bezüglich $\Delta U_{tG}$ die positive Stellgröße (+Y) unterdrückt wird.

6. Schweißstrom-Generator nach einem der vorherigen Ansprüche, dadurch gekennzeichnet,
daß die Grundspannung ($U_G$) während der Grundphasen ($t_G$) mittels einer Sample-and-Hold-Schaltung (3) erfaßt und gespeichert wird dergestalt, daß die Grundspannung ($U_G$) in der Hold-Phase als Istwertsignal zur Verfügung steht.

7. Schweißstrom-Generator nach Anspruch 6, dadurch gekennzeichnet,
daß das Sample-Signal bei sinkender Meßspannung soweit verzögert aufgeschaltet und bei steigender Meßspannung sofort ausgeschaltet wird, so daß nur der waagrechte Ast der Grundspannung ($U_G$) erfaßt wird.

8. Schweißstrom-Generator nach Anspruch 6, dadurch gekennzeichnet,
daß das Ausgangssignal ($U_G$) der Sample-and-Hold-Schaltung (3) als direktes Maß für die Länge (LL) des Lichtbogens dem Eingang eines PI-Reglers (5) aufgegeben wird, dem die Lichtbogenlänge als vorgebbarer Sollwert (SWLL) zugeführt wird, wobei die Stellgröße ($\pm Y$) des PI-Reglers einem Schalter (9,9',9'') aufgegeben wird zur Einstellung der Regelart, und daß die Regelart aus je einem Additionsschaltkreis (11, 11', 11'') gebildet ist, dem die Stellgröße ($\pm Y$) sowie die Istgröße zugeführt ist und dessen Ausgangsgröße den neuen Sollwert bildet, der dem Leistungsteil zugeführt wird.

9. Schweißstrom-Generator nach einem der vorherigen Ansprüche, dadurch gekennzeichnet,
daß die Stellgröße ($\pm Y$) nach Bildung eines Mittelwertes einem Grenzwertmelder (12) und einem Anzeigegerät (17) zugeführt wird, welches eine Nullabweichung in beiden Richtungen anzuzeigen imstande ist.

10. Schweißstrom-Generator nach Anspruch 9, dadurch gekennzeichnet,
daß der Grenzwertmelder (12) einen einstellbaren Grenzsollwert aufweist und nur wahrend des Schweißprozesses freigegeben ist.

Fig. 1

Grundspannung

Sample u. Hold

*Fig. 2*

Regelfaktor

E7 = 0K

E7 = 6,9K

E7 = 10K

| | 1V | 2V | 3V | 4V | 5V | 6V | $\rightarrow Ut_G$ |
| 4ms | 8ms | 12ms | 16ms | 20ms | 24ms | $\rightarrow t_G$ |

*Fig. 3*